# EUROPÄISCHE PATENTSCHRIFT

(11) **EP 4 666 034 B1**
(45) Veröffentlichungstag und Bekanntmachung des Hinweises auf die Patenterteilung: **21.10.2026**
(21) Anmeldenummer: 23818408.9
(22) Anmeldetag: 05.12.2023
(51) Int. Cl.: G01C 21/34, G01C 21/00, B60L 58/24

(54) **COMPUTERIMPLEMENTIERTES VERFAHREN ZUM ERZEUGEN VON KARTENDATEN MIT ENERGIEVERBRAUCHS-PROGNOSEWERTEN, COMPUTERLESBARES SPEICHERMEDIUM, SYSTEM ZUM ERZEUGEN VON KARTENDATEN MIT ENERGIEVERBRAUCHS-PROGNOSEWERTEN**
COMPUTER-IMPLEMENTED METHOD FOR GENERATING MAP DATA WITH ENERGY CONSUMPTION FORECAST VALUES, COMPUTER-READABLE STORAGE MEDIUM, SYSTEM FOR GENERATING MAP DATA WITH ENERGY CONSUMPTION FORECAST VALUES
PROCÉDÉ MIS EN OUVRE PAR ORDINATEUR POUR GÉNÉRATION DE DONNÉES CARTOGRAPHIQUES AVEC VALEURS PRÉVISIONNELLES DE CONSOMMATION D'ÉNERGIE, SUPPORT D'ENREGISTREMENT LISIBLE PAR ORDINATEUR, ET SYSTÈME DE GÉNÉRATION DE DONNÉES CARTOGRAPHIQUES AVEC VALEURS PRÉVISIONNELLES DE CONSOMMATION D'ÉNERGIE

(30) Priorität: 14.02.2023 DE 102023103530
(43) Veröffentlichungstag der Anmeldung: 24.12.2025
(73) Patentinhaber: Bayerische Motoren Werke Aktiengesellschaft, 80809 München (DE)
(72) Erfinder: ERDEM, Caglayan, 86156 Augsburg (DE)
(86) Internationale Anmeldenummer: PCT/EP2023/084321
(87) Internationale Veröffentlichungsnummer: WO 2024/170129

(56) Entgegenhaltungen:
- DE-A1- 102007 059 121
- DE-A1- 102010 041 616
- DE-A1- 102012 016 768
- US-A1- 2012 232 783
- US-A1- 2020 116 516

## Beschreibung

Die Erfindung betrifft ein computerimplementiertes Verfahren zum Erzeugen von Kartendaten mit Energieverbrauchs-Prognosewerten, insbesondere zur Verwendung im Energiemanagement eines Elektrofahrzeugs. Ferner betrifft die Erfindung ein computerlesbares Speichermedium und ein System zur Umsetzung des Verfahrens.

Elektrofahrzeuge, insbesondere batterieelektrische Fahrzeuge, werden als wichtiger Beitrag zur Verkehrswende gesehen und sind bereits heute aus der modernen Mobilität nicht mehr wegzudenken. Im Gegensatz zu Fahrzeugen mit herkömmlichen Verbrennungsmototoren erfolgt der Antrieb bei batterieelektrischen Fahrzeugen über einen Elektromotor, welcher von einer Batterie mit Energie versorgt wird. Die Batterie muss daher regelmäßig geladen werden. Typischerweise wird aber auch bei Bergabfahrten oder beim Bremsen die Bewegungsenergie des Fahrzeugs dafür genutzt, Energie in die Batterie zurückzuführen.

Verschiedene Faktoren beeinflussen die Leistungsfähigkeit der in Elektrofahrzeugen verbauten Batterien. Ein entscheidender Einflussfaktor ist die Temperatur, bei der die Batterie betrieben wird: Typischerweise weisen die Batterien einen Temperaturbereich auf, in dem die Leistungsfähigkeit maximal ist, da hier die elektrochemischen Prozesse optimal funktionieren. Dieser Temperaturbereich kann beispielsweise zwischen 20 und 40 Grad Celsius liegen. Wird die Batterie außerhalb des bevorzugten Temperaturbereichs betrieben, kann dies zu einer verkürzten Reichweite des Elektrofahrzeugs führen, da nicht die volle Leistungsfähigkeit der Batterie gegeben ist. Darüber hinaus können Abnutzungserscheinungen der Batterie auftreten, welche eine schleichende Verringerung der Batteriekapazität (Degradation) zur Folge hat.

Um den oben genannten Problemen (Degradation, Reichweitenverkürzung) entgegenzuwirken, sind beispielsweise Lösungen bekannt, welche die Batterie vor der Fahrt aufwärmen, sodass die Batterie bei Fahrtbeginn ihren bevorzugten Temperaturbereich erreicht.

Aus der DE 10 2012 016 768 A1 ist ein Verfahren zum Bestimmen einer energiesparenden Route basierend auf kartographischen Daten bekannt, die ein reales Verkehrswegenetz in Form von Routensegmenten und Routenknoten wiedergeben. Das Verfahren umfasst die folgenden Schritte: Unterteilen von für eine Routenberechnung bereitgestellten Routensegmenten in Abschnitte mit jeweils vorgegebenem Geschwindigkeitsprofil; Bereitstellen eines für die Routensegmentabschnitte jeweils zu erwartenden Energieverbrauchswerts auf Basis des jeweils zugeordneten Geschwindigkeitsprofils, wobei auch ein Übergang zu einem folgenden Routensegment betrachtet werden kann; und Berechnen von Gewichten für die jeweiligen Routensegmente auf Basis der für die Routensegmentabschnitte bereitgestellten Energieverbrauchswerte. Die Gewichte zum Bestimmen der energiesparenden Route können im Rahmen der Routenberechnung herangezogen werden.

Die DE 10 2007 059 121 A1 zeigt ein Verfahren zur Bestimmung einer Route von einem Start- zu einem Zielpunkt, wobei eine mit Blick auf den Energieverbrauch optimierte Route bestimmt wird. Hierzu werden Elementen von Kartendaten, die ein Verkehrswegenetz abbilden, Energieverbrauchswerte zugeordnet, die einen geschwindigkeitsabhängigen Anteil zum Halten einer Geschwindigkeit enthalten.

Die DE 10 2010 041 616 A1 zeigt ein Verfahren zum Durchführen einer Routenplanung anhand von Kartendaten, die ein Straßennetz mit Straßenabschnitten darstellen. Hierbei wird ein normierter Energieverbrauch als Eigenschaft des Streckenabschnittes verwendet, wobei der erfasste Energieverbrauch abhängig von einem fahrzeugtypischen Vergleichswert normiert ist.

Die US 2012/232783 A1 zeigt ein Verfahren zur Bestimmung energieeffizienter Routen, wobei Energieverbrauchsdaten erfasst werden, während ein Fahrzeug auf einem ersten Straßenabschnitt fährt. Die mit dem ersten Straßenabschnitt assoziierten Energieverbrauchsdaten können verwendet werden, um den erwarteten Energieverbrauch bei der Fahrt auf einem zweiten Straßenabschnitt vorherzusagen, der ähnliche physikalische Eigenschaften wie der erste Straßenabschnitt aufweist.

Die US 2020/116516 A1 zeigt ein Verfahren zur Routenführung für ein Elektrofahrzeug, bei dem die Batterieleistung basierend auf der Umgebungstemperatur und/oder der Batterietemperatur vorhergesagt wird, wenn nach einer Reiseroute zu einem Ziel gesucht wird, und bei dem als Reiseroute eine Route ausgewählt wird, welche die geringsten Gesamtkosten für den Batterieverbrauch basierend auf der vorhergesagten Batterieleistung darstellt.

Es ist Aufgabe der vorliegenden Erfindung, die Degradation der Batterie eines Elektrofahrzeugs zu reduzieren.

Diese Aufgabe wird durch ein computerimplementiertes Verfahren nach Anspruch 1 gelöst.

Insbesondere wird die Aufgabe durch ein computerimplementiertes Verfahren zum Erzeugen von Kartendaten mit Energieverbrauchs-Prognosewerten gelöst. Das Verfahren bzw. die erzeugten Kartendaten können insbesondere im Energiemanagement eines Elektrofahrzeugs verwendet werden. Dabei umfasst das Verfahren die folgenden Schritte:
a) Laden von Basis-Kartendaten, die ein Netz aus Straßenabschnitten aufweisen;
b) Ausführen der folgenden Schritte, jeweils für jeden Straßenabschnitt:
   b1) Ermitteln einer Menge von Nachbar-Straßenabschnitten unter Verwendung der Basis-Kartendaten;
   b2) Berechnen von Übergangsvektoren für jede Kombination aus dem Straßenabschnitt und einem Nachbar-Straßenabschnitt unter Verwendung der Basis-Kartendaten;
   b3) Berechnen von jeweils einem Energieverbrauchswert für jeden Übergangsvektor unter Verwendung eines Energieverbrauchs-Prognosemodells;
   b4) Berechnen eines Energieverbrauchs-Prognosewertes des Straßenabschnitts unter Verwendung der berechneten Energieverbrauchswerte;
c) Bereitstellen von Kartendaten, welche das Netz aus Straßenabschnitten und die zugehörigen Energieverbrauchs-Prognosewerte aufweisen.

Unter einem Netz aus Straßenabschnitten kann im Rahmen dieser Erfindung eine Datenstruktur verstanden werden, welche eine Menge von miteinander vernetzten Straßenabschnitten beschreibt. Eine solche Datenstruktur kann beispielsweise ein gerichteter Graph sein. Die Basis-Kartendaten können somit insbesondere digitale Kartendaten sein, wie sie üblicherweise zur Fahrzeugnavigation eingesetzt werden. Zusätzlich zu dem Netz aus Straßenabschnitten weisen derartige Kartendaten typischerweise Zusatzinformationen für jeden Straßenabschnitt auf, wie beispielsweise Länge, zulässige Höchstgeschwindigkeit, Straßentyp usw.

Ein Gedanke der vorliegenden Erfindung liegt darin, den Energiebedarf des Elektrofahrzeugs auf jeweiligen Straßenabschnitten zu prognostizieren. Hinsichtlich der Degradation sind insbesondere hohe Leistungsabrufe als kritisch zu bewerten, wenn die Batterie außerhalb des bevorzugten Temperaturbereichs ist, beispielsweise beim Starten des Fahrzeugs im Winter. Solche hohen Leistungsabrufe können beispielsweise durch starke Beschleunigungen, hohe Geschwindigkeiten oder Bergauffahren entstehen.

Gemäß dem beschriebenen Verfahren wird jeder Straßenabschnitt im Kontext seiner umliegenden Straßenabschnitte bewertet und aus dieser Gesamtbetrachtung ein Energieverbrauchs-Prognosewert für den Straßenabschnitt abgeleitet. Dem liegt der Gedanke zugrunde, dass der Leistungsabruf eines Elektrofahrzeugs auf einem aktuellen Straßenabschnitt durch einen nachfolgenden Straßenabschnitt beeinflusst werden kann. Beispielsweise ist bei einer Autobahnauffahrt (aktueller Straßenabschnitt) mit einem hohen Leistungsabruf zu rechnen, da der Fahrer das Fahrzeug auf eine höhere Geschwindigkeit beschleunigt, die für die Autobahn (nachfolgender Straßenabschnitt) angemessenen bzw. zugelassen ist. Umgekehrt ist z.B. auf Autobahnabfahrten ein nur geringer Leistungsabruf oder sogar eine Energierückgewinnung zu erwarten, da das Fahrzeug von hoher Geschwindigkeit abgebremst wird und ggf. durch Rekuperation Energie rückgewinnen kann.

Allgemein wird der beschriebene Ansatz in dem erfindungsgemäßen Verfahren durch die Schritte b1) bis b4) des Verfahrens wiedergespiegelt, die für jeden einzelnen Straßenabschnitt separat ausgeführt werden.

Hierzu wird gemäß Schritt b1) für den betrachteten Straßenabschnitt die Menge der Nachbar-Straßenabschnitte unter Verwendung der Basis-Kartendaten bestimmt. Nachbar-Straßenabschnitte sind dabei Straßenabschnitte aus den Basis-Kartendaten, die in einer Umgebung des betrachteten Straßenabschnitts (z.B. unmittelbare Vorgänger- / Nachfolger des betrachteten Straßenabschnitts) liegen.

In Schritt b2) wird anschließend für jede Kombination aus dem betrachteten Straßenabschnitt und einem seiner Nachbar-Straßenabschnitte ein Übergangsvektor berechnet. Der Übergangsvektor kann Änderungen relevanter Parameter (wie Höchstgeschwindigkeit oder Steigung) beschreiben, die sich beim Übergang zwischen dem betrachteten Straßenabschnitt und dem Nachbar-Straßenabschnitt einstellen. Die Parameterwerte der einzelnen Straßenabschnitte sind hierbei in den Basis-Kartendaten vorhanden. Im Ergebnis liegt eine Menge von Übergangsvektoren vor, die Parameteränderungen für jeden möglichen Übergang von dem Straßenabschnitt zu einem seiner Nachbar-Straßenabschnitte (bzw. umgekehrt) beschreiben.

In Schritt b3) wird für jeden der berechneten Übergangsvektoren ein Energieverbrauchswert bestimmt, wobei ein Energieverbrauchs-Prognosemodell verwendet wird. Der berechnete Energieverbrauchswert beschreibt den erwarteten Energieverbrauch des Fahrzeugs unter der Annahme, dass das Fahrzeug von dem gewählten Straßenabschnitt den Nachbar-Straßenabschnitt ansteuert, oder von dem Nachbar-Straßenabschnitt auf den gewählten Straßenabschnitt gelangt.

In dem Schritt b4) wird unter Verwendung der berechneten Energieverbrauchswerte ein Energieverbrauchs-Prognosewert für den gewählten Straßenabschnitt berechnet.

Beispielsweise kann hierzu kann einer der in Schritt b3) berechneten Energieverbrauchswerte ausgewählt werden, etwa der höchste (für eine Worst-Case-Abschätzung).

Schließlich werden gemäß dem beschriebenen Verfahren Kartendaten bereitgestellt, welche für jeden Straßenabschnitt den berechneten Energieverbrauchs-Prognosewert enthalten. Insbesondere können die Kartendaten auf der Grundlage der Basis-Kartendaten erstellt werden, wobei die berechneten Energieverbrauchs-Prognosewerte als zusätzliche Attribute der Straßenabschnitte enthalten sind. In diesem Fall können die bereitgestellten Kartendaten als gekennzeichnete (gelabelte) Fassung der Basis-Karten aufgefasst werden.

Somit ist das Verfahren in der Lage, Kartendaten zu erzeugen, welche präzise Informationen über die auf einzelnen Straßenabschnitten zu erwartenden Leistungsabrufe enthalten. Diese Informationen können im Energiemanagement eines Elektrofahrzeugs verwendet werden, um eine passende und effiziente Betriebsstrategie für das Elektrofahrzeug auszuwählen. Beispielsweise kann ein Vorwärmen der Batterie (nur) dann ausgeführt werden, wenn ein hoher Leistungsabruf auf einem Straßenabschnitt zu erwarten ist, den das Elektrofahrzeug (schnell) nach Startvorgang erreicht. Dies verbessert die Energieeffizienz des Elektrofahrzeugs.

In einer Ausführungsform kann die Menge von Nachbar-Straßenabschnitten alle Straßenabschnitte enthalten, die mit dem Straßenabschnitt unmittelbar verbunden sind. In diesem Fall können im Netz der Straßenabschnitte die Nachbar-Straßenabschnitte des betrachteten Straßenabschnitts als seine direkten Vorgänger bzw. Nachfolger angesehen werden.

Die dieser Ausführungsform zugrundeliegende Definition der Nachbar-Straßenabschnitte als unmittelbare Vorgänger / Nachfolger hat sich in praktischen Experimenten als besonders geeignet erwiesen, präzise Energieverbrauchs-Prognosewerte zu erzeugen.

Alternativ kann die Menge von Nachbar-Straßenabschnitten aber auch alle Straßenabschnitte enthalten, die mit dem Straßenabschnitt durch mindestens einen weiteren Straßenabschnitt verbunden sind. In dieser Ausführungsform wird die Nachbar-Relation also auf indirekt verbundene Straßenabschnitte erweitert.

In einer weiteren Ausführungsform können die Basis-Karten für zumindest einige der Straßenabschnitte einen oder mehrere der folgenden Werte aufweisen: Geschwindigkeitsbegrenzung, Straßentyp, Steigung, Länge. Bevorzugt weisen die Basis-Kartendaten alle genannten Parameter für alle Straßenabschnitte auf. Somit können die Parameter, welche besonders relevant für den Energieverbrauch des Elektrofahrzeugs sind, möglichst umfassend in den Übergangsvektoren abgebildet werden.

In einer weiteren Ausführungsform können die Übergangsvektoren einen oder mehrere der folgenden Werte aufweisen: Differenz der Geschwindigkeitsbegrenzung, Änderung des Straßentyps, Steigungsdifferenz.

Wie bereits im Zusammenhang mit der vorhergehenden erläutert, begünstigt die umfassende Modellierung unterschiedlicher Parameter bzw. deren Änderungen am Übergang der Straßenabschnitte die Qualität der erzeugten Energieverbrauchs-Prognosewerte.

In einer Ausführungsform kann das Energieverbrauchs-Prognosemodell mindestens ein Regressionsmodell aufweisen. Das Regressionsmodell enthält dabei eine Abbildungsvorschrift von Übergangsvektoren zu Energieverbrauchswerten.

In einer einfachen Implementierung kann das Regressionsmodell durch eine Funktion gegeben sein, welche die Komponenten des Eingabe-Übergangsvektors gewichtet und den Energieverbrauchswert aus der gewichteten Summe bestimmt.

Insbesondere kann es sich bei dem Regressionsmodell um ein trainiertes Modell handeln, beispielsweise ein trainiertes neuronales Netz. Als Trainingsdaten können Datensätze dienen, welche den tatsächlichen Energiebedarf des Elektrofahrzeugs auf einem jeweiligen Straßenabschnitt angeben.

In einer Ausführungsform kann das Regressionsmodell mindestens einen Entscheidungsbaum, bevorzugt einen zufälligen Wald von Entscheidungsbäumen (Random Forest) enthalten.

Das Verfahren bzw. das Energieverbrauchs-Prognosemodell kann eine Regression nach einem Random-Forest-Verfahren durchführen, bei dem die Regression auf der Grundlage von mehreren unkorrelierten Entscheidungsbäumen durchgeführt sind, die während des Trainingsprozesses randomisiert gewachsen sind.

Die Verwendung eines Random-Forest-Ansatzes hat sich bei der vorliegenden Erfindung als leistungsfähig erwiesen und bietet den Vorteil, dass selbst bei einer geringen Menge von Trainingsdaten eine Regression mit hoher Güte erfolgt.

In einer weiteren Ausführungsform entspricht in Schritt b4) der Energieverbrauchs-Prognosewert des Straßenabschnitts dem größten unter den Energieverbrauchswerten, die in Schritt b3) berechnet werden. Das bedeutet, dass der Energieverbrauchs-Prognosewert eines Straßenabschnitts auf den höchsten Energieverbrauchswert festgelegt wird, der sich bei Betrachtung aller Kombinationsmöglichkeiten des Straßenabschnitts mit einer seiner Nachbar-Straßenabschnitt ergibt.

Die beschriebene Ausführungsform führt zu einer Worst-Case-Abschätzung, bei der jedem Straßenabschnitt der größtmögliche Energieverbrauch zugerechnet wird, der sich aus dem Übergang von/zu einem einzelnen Nachbar-Straßenabschnitt ergibt - ungeachtet davon, wie wahrscheinlich dieser Übergang ist. Eine solche Worst-Case-Abschätzung kann beispielsweise sinnvoll sein, um eine Betriebsstrategie für das Elektrofahrzeug auszuwählen, bei der eine Degradation der Batterie verhindert werden soll.

In einer alternativen Ausführungsform entspricht der in Schritt b4) bestimmte Energieverbrauchs-Prognosewert einem gewichteten Mittelwert der Energieverbrauchswerte, die in Schritt b3) berechnet wurden. Die Gewichte können beispielsweise die (statistische) Wahrscheinlichkeit dafür wiedergeben, dass das Elektrofahrzeug den entsprechenden Übergang der Straßenabschnitte zurücklegt.

Diese alternative Ausführungsform kann eine präzisere Abschätzung des zu erwartenden Energieverbrauchs ermöglichen.

In einer weiteren Ausführungsform kann das Verfahren ferner die folgenden Schritte umfassen:
d) Ermitteln eines GPS-Standorts eines Elektrofahrzeugs;
e) Ermitteln eines, insbesondere maximalen, Referenz-Energieverbrauchs-Prognosewertes in einer Umgebung des Elektrofahrzeugs gemäß dem GPS-Standort unter Verwendung der Kartendaten;

Gemäß dieser Ausführungsform werden die erzeugten Kartendaten dazu verwendet, einen Referenzwert für den Energieverbrauch des Elektrofahrzeugs zu ermitteln, welcher in einer (aktuellen) Umgebung des Elektrofahrzeugs erwartet wird. Bei dem Referenzwert kann es sich insbesondere um den maximalen Energieverbrauchs-Prognosewert aller Straßenabschnitte in der Umgebung handeln, für eine Worst-Case-Abschätzung. Dieser Ausführungsform liegt insbesondere der Gedanke zugrunde, dass maximale Leistungsabrufe kurz nach dem Startvorgang des Elektrofahrzeugs bei niedriger Temperatur die Degradation der Batterie vorantreiben können.

Zur Bestimmung der Umgebung wird zunächst ein GPS-Standort des Elektrofahrzeugs ermittelt, beispielsweise über einen im Fahrzeug integrierten GPS-Sensor.

Als Umgebung des Fahrzeugs kann die Menge von Straßenabschnitten verstanden werden, die ausgehend von dem aktuellen GPS-Standort des Fahrzeugs in kurzer Zeit und/oder in kurzer Distanz erwartungsgemäß erreicht werden kann.

Beispielsweise kann die Umgebung als Menge von Straßenabschnitten verstanden werden, die in einem vorgegebenen Radius ausgehend von dem GPS-Standort des Elektrofahrzeugs liegt. Der vorgegebene Radius kann beispielsweise 5 km betragen. Alternativ kann die Umgebung alle Straßenabschnitte umfassen, die in einer vorgegebenen Zeit (z.B. 10 Minuten) nach Startvorgang des Elektrofahrzeugs erreicht werden können. Ferner kann die Umgebung in Abhängigkeit von einem vorgegebenen Navigationsziel definiert werden.

In einer weiteren Ausführungsform kann das Verfahren ferner die folgenden Schritte umfassen:
f) Anpassen einer Energiemanagement-Konfiguration des Elektrofahrzeugs, insbesondere zum Vorwärmen einer Batterie des Elektrofahrzeugs, basierend auf einem Referenz-Energieverbrauchs-Prognosewert.

Die Energiemanagement-Konfiguration des Elektrofahrzeugs kann beispielsweise steuern, ob ein Vorwärmvorgang der Batterie des Elektrofahrzeugs vor Fahrtbeginn durchgeführt wird, ggf. in Abhängigkeit von der Außentemperatur.

Abhängig von dem Referenz-Energieverbrauchs-Prognosewert kann der Vorwärmvorgang veranlasst werden, beispielsweise, wenn der Referenz-Energieverbrauchs-Prognosewert einen Schwellenwert überschreitet. Zusätzlich können weitere Parameter berücksichtigt werden, beispielsweise der aktuelle Ladezustand der Batterie, die Außentemperatur, das Alter der Batterie, und ähnliche Parameter.

In dieser Ausführungsform ist es also möglich, insbesondere in Kombination mit der davor beschriebenen Ausführungsform, die erzeugten Energieverbrauchs-Prognosewerte im Energiemanagement des Elektrofahrzeugs zu verwenden, um dessen Betriebsstrategie entsprechend anzupassen. Dies verbessert die Energieeffizienz des Elektrofahrzeugs und kann die in der Einleitung beschriebenen Probleme wie Degradation und Reichweitenverkürzung verhindern.

Die Aufgabe wird ferner durch ein computerlesbares Speichermedium gelöst. Das computerlesbares Speichermedium enthält Instruktionen, die mindestens einen Prozessor dazu veranlassen, ein Verfahren wie vorstehend beschrieben zu implementieren, wenn die Instruktionen durch den mindestens einen Prozessor ausgeführt werden.

Hinsichtlich des computerlesbaren Speichermediums ergeben sich ähnliche Vorteile und technische Wirkungen wie in Verbindung mit dem erfindungsgemäßen Verfahren beschrieben worden ist.

Die Aufgabe wird ferner durch ein System zum Erzeugen von Kartendaten mit Energieverbrauchs-Prognosewerten, insbesondere zur Verwendung im Energiemanagement eines Elektrofahrzeugs, gelöst. Dabei weist das System das Folgende auf:
- mindestens einen Speicher, welcher ein Energieverbrauchs-Prognosemodell und/oder Basis-Kartendaten enthält, die ein Netz aus Straßenabschnitten aufweisen;
- eine Backend-Rechenvorrichtung, welche dazu ausgebildet ist, die folgenden Schritte auszuführen:
   a) Laden der Basis-Kartendaten;
   b) Ausführen der folgenden Schritte, jeweils für jeden Straßenabschnitt:
      b1) Ermitteln einer Menge von Nachbar-Straßenabschnitten unter Verwendung der Basis-Kartendaten;
      b2) Berechnen von Übergangsvektoren für jede Kombination aus dem Straßenabschnitt und einem Nachbar-Straßenabschnitt unter Verwendung der Basis-Kartendaten;
      b3) Berechnen von jeweils einem Energieverbrauchswert für jeden Übergangsvektor unter Verwendung des Energieverbrauchs-Prognosemodells;
      b4) Berechnen eines Energieverbrauchs-Prognosewertes des Straßenabschnitts unter Verwendung der berechneten Energieverbrauchswerte;
   c) Bereitstellen von Kartendaten, welche das Netz aus Straßenabschnitten und die zugehörigen Energieverbrauchs-Prognosewerte aufweisen.

Hinsichtlich des Systems ergeben sich ähnliche Vorteile und technische Wirkungen wie in Verbindung mit dem erfindungsgemäßen Verfahren beschrieben worden ist.

In einer Ausführungsform kann das System ferner ein Elektrofahrzeug umfassen, welches das Folgende aufweist:
- einen GPS-Sensor;
- eine Kommunikationsvorrichtung; und
- eine Fahrzeug-Rechenvorrichtung.

Dabei ist die Fahrzeug-Rechenvorrichtung dazu eingerichtet,
- eine Position des Elektrofahrzeugs mittels des GPS-Sensors zu bestimmen;
- die Position mittels der Kommunikationsvorrichtung an die Backend-Rechenvorrichtung zu übermitteln;
- einen Referenz-Energieverbrauchs-Prognosewert mittels der Kommunikationsvorrichtung von der Backend-Rechenvorrichtung zu empfangen.

Dabei ist die Backend-Rechenvorrichtung ferner dazu ausgebildet, basierend auf der Position und den Kartendaten den Referenz-Energieverbrauchs-Prognosewert zu ermitteln und an die Kommunikationsvorrichtung zu übermitteln.

Insbesondere kann es sich bei dem Referenz-Energieverbrauchs-Prognosewert um den maximalen Energieverbrauchs-Prognosewert eines Straßenabschnitts handeln, der in einer Umgebung des Standorts des Fahrzeugs liegt.

In einer Ausführungsform kann das Elektrofahrzeug ferner das Folgende aufweisen:
- eine Energiemanagementvorrichtung; und
- eine Heizvorrichtung zum Heizen einer Batterie des Elektrofahrzeugs.

Dabei ist die Energiemanagementvorrichtung dazu ausgebildet ist, in Abhängigkeit von dem Referenz-Energieverbrauchs-Prognosewert die Heizvorrichtung zu steuern. Alternativ oder zusätzlich kann auch eine Kühlvorrichtung, z.B. ein Ventilator oder eine Klimaanlage in Abhängigkeit vom Referenz-Energieverbrauchs-Prognosewert gesteuert, beispielsweise aktiviert, werden.

Für diese Ausführungsform des Systems ergeben sich ähnliche Vorteile und technische Wirkungen, wie sie bereits in Zusammenhang mit den entsprechenden Ausführungsformen des Verfahrens beschrieben wurden.

Es versteht sich von selbst, dass die Merkmale und die damit jeweils erzielbaren Vorteile, die in Bezug auf das erfindungsgemäße Verfahren beschrieben wurden, auf die erfindungsgemäßen Vorrichtungen anwendbar bzw. übertragbar sind und umgekehrt. Konkret sind die Komponenten der Vorrichtungen im Kontext der vorliegenden Beschreibung der Erfindung dazu ausgebildet, die erfindungsgemäßen Verfahrensschritte durchzuführen. Ebenso sind die Funktionen der oben beschriebenen Komponenten der erfindungsgemäßen Vorrichtungen als Verfahrensschritte des erfindungsgemäßen Verfahrens anwendbar.

Nachfolgend wird die Erfindung anhand von Ausführungsbeispielen beschrieben, die anhand der Figuren näher erläutert werden. Hierbei zeigen:
- Figur 1a:: Basis-Kartendaten gemäß einem Ausführungsbeispiel;
- Figur 1b:: eine Menge von Nachbar-Straßenabschnitten in dem Ausführungsbeispiel der Figur 1a;
- Figur 2:: ein Ablaufdiagramm des Verfahrens gemäß einem Ausführungsbeispiel;
- Figur 3:: ein System gemäß einem Ausführungsbeispiel.

In der nachfolgenden Beschreibung werden für gleiche und gleich wirkende Teile dieselben Bezugsziffern verwendet.

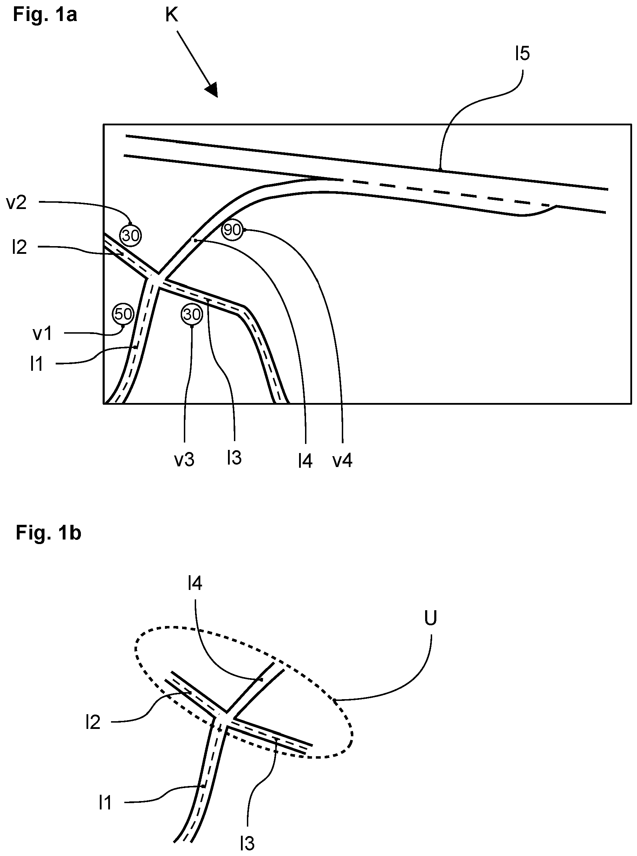

Figur 1a zeigt eine grafische Darstellung von Basis-Kartendaten K gemäß einem Ausführungsbeispiel.

Die Basis-Kartendaten K enthalten fünf Straßenabschnitte I1, I2, I3, I4 und I5. Die Straßenabschnitte I1, I2, I3 und I4 verlaufen in jeweils unterschiedliche Richtungen und bilden eine gemeinsame Kreuzung. Der Straßenabschnitt I4 ist eine Auffahrt zur Autobahn, welche dem Straßenabschnitt I5 entspricht.

Darüber hinaus enthalten die Basis-Kartendaten Geschwindigkeitsbegrenzungen v1, v2, v3, v4 jeweils für die Straßenabschnitte I1, I2, I3 und I4:
- Auf dem Straßenabschnitt I1 gilt die Geschwindigkeitsbegrenzung v1 (= 50 km/h).
- Auf dem Straßenabschnitt I2 gilt die Geschwindigkeitsbegrenzung v2 (= 30 km/h).
- Auf dem Straßenabschnitt I3 gilt die Geschwindigkeitsbegrenzung v3 (= 40 km/h).
- Auf dem Straßenabschnitt I4 gilt die Geschwindigkeitsbegrenzung v4 (= 90 km/h).

Figur 1b zeigt einen vergrößerten Ausschnitt der Figur 1a zur Darstellung der Nachbar-Straßenabschnitte des Straßenabschnitts I1.

Der Straßenabschnitt I1 ist mit den Straßenabschnitten I2, I3 und I4 verbunden. Ein Fahrzeug, welches sich auf dem Straßenabschnitt I1 der gemeinsamen Kreuzung der Straßenabschnitte I1, I2, I3 und I4 nähert, kann also durch Linksabbiegen auf den Straßenabschnitt I2, durch Geradeausfahren auf den Straßenabschnitt I4 und damit in Richtung der Autobahn I5, oder durch Rechtsabbiegen auf den Straßenabschnitt I3 fahren.

Jeder der Straßenabschnitte I2, I3, I4 sind also unmittelbare Nachfolger-Straßenabschnitte des Straßenabschnitts I1 verbunden. Für den Straßenabschnitt I1 ist die Menge U der Nachbar-Straßenabschnitte daher $U = \left\{I2, I3, I4\right\} .$

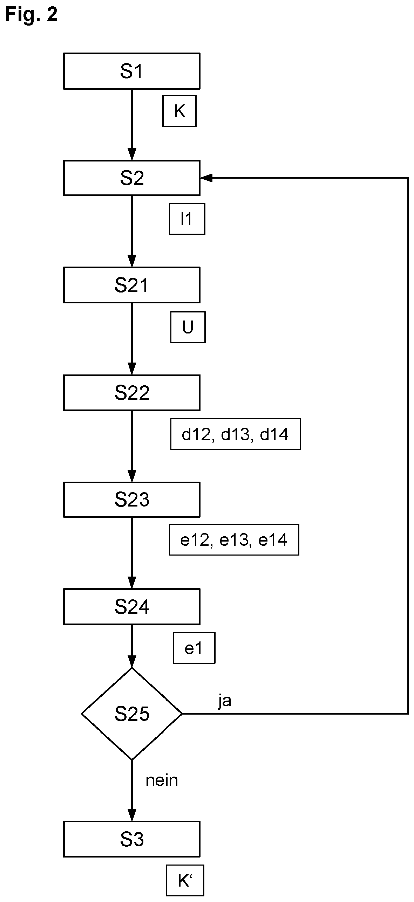

In Figur 2 ist ein Ablauf des Verfahrens gemäß einem Ausführungsbeispiel dargestellt. Hinsichtlich der Basis-Kartendaten wird dabei Bezug auf das Ausführungsbeispiel der Figuren 1a und 1b genommen.

In Schritt S1 werden die Basis-Kartendaten K geladen, die das Netz der Straßenabschnitte I1 bis I5 sowie entsprechende Geschwindigkeitsbegrenzungen v1 bis v4 als Zusatzinformationen aufweisen (vgl. Figur 1a).

In Schritt S2 wird ein beliebiger der Straßenabschnitte I1 bis I5 ausgewählt, für den noch kein Energieverbrauchs-Prognosewert berechnet worden ist. Hierzu können die noch zu verarbeitenden Straßenabschnitte in einer geeigneten Datenstruktur verwaltet werden, beispielsweise in einem Stack. Gemäß diesem Ausführungsbeispiel wird angenommen, dass der Straßenabschnitt I1 gewählt wird. Die nachfolgenden Schritte S21, S22, S23, S24 beziehen sich auf den in Schritt S2 ausgewählten Straßenabschnitt I1.

In Schritt S21 wird die Menge U der Nachbar-Straßenabschnitte für den Straßenabschnitt I1 ermittelt. Wie in Figur 1b dargestellt, enthält die Menge U in diesem Ausführungsbeispiel gerade die Straßenabschnitte I2, I3, I4.

In Schritt S22 werden Übergangsvektoren d12, d13, d14 für jede Kombination aus dem ausgewählten Straßenabschnitt I1 und einem seiner Nachbar-Straßenabschnitte I2, I3 und I4 berechnet, d.h. für die Kombinationen {I1, I2}, {I1, I3} und {I1, I4}. Jede Komponente eines Übergangsvektors d12, d13, d14 enthält eine Differenz der Geschwindigkeitsbegrenzungen der jeweiligen Straßenabschnitte.

Der Übergangsvektor d14 (für die Kombination der Straßenabschnitte {I1, I4}) enthält so beispielsweise die folgende Geschwindigkeitsbegrenzungs-Differenz: $v 4 - v 1 = 90 km / h - 50 km / h = 40 km / h .$

Damit ist der entsprechende Ubergangsvektor durch d14 = (40 km/h) gegeben.

Die weiteren Übergangsvektoren d12 (Kombination {I1, I2}) und d13 (Übergang {I1, I3}) sind gegeben durch: $d 12 = \left(v2-v1\right) = \left(30 km/h-50 km/h\right) = \left(-20 km/h\right) ;$ und $d 13 = \left(v3-v1\right) = \left(50 km/h-50 km/h\right) = \left(0 km/h\right) .$

In Schritt S23 wird mittels des Energieverbrauchs-Prognosemodells für jeden der zuvor berechneten Übergangsvektoren d12, d13, d14 ein

Energieverbrauchsprognosewert e12, e13, e14 bestimmt, beispielsweise in der Einheit Joule pro Meter (J/m). Für dieses Ausführungsbeispiel werden die folgenden Werte angenommen: $e 12 = 50 J / m ;$ $e 13 = 1000 J / m ;$ und $e 14 = 3000 J / m$

Diese Werte korrespondieren zu den erwartenden Energieverbrauchswerten unter der jeweiligen Annahme, dass das Fahrzeug vom Straßenabschnitt I1 auf den jeweiligen Folge-Straßenabschnitt fährt. Der geringste Energieverbrauchswert ergibt sich für den Übergang I1 - I2, da das Fahrzeug beim Wechsel von dem Straßenabschnitt mit zulässiger Höchstgeschwindigkeit 50 km/h auf einen Straßenabschnitt mit zulässiger Höchstgeschwindigkeit 30 km/h erwartungsgemäß abbremst, zumindest nicht beschleunigt. Auf der anderen Seite ergibt sich der größte Energieverbrauchswert für den Übergang I1 - 14, da das Fahrzeug hier erwartungsgemäß beschleunigt, um die höhere zulässige Höchstgeschwindigkeit (90 km/h statt 50 km/h) zu erreichen.

In Schritt S24 wird der Energieverbrauchs-Prognosewert e1 für den Straßenabschnitt I1 berechnet bzw. ausgewählt. In diesem Ausführungsbeispiel wird der größte der zuvor berechneten Energieverbrauchswerte ausgewählt. Der Energieverbrauchs-Prognosewert e1 für den Straßenabschnitt I1 entspricht somit: $e 1 = max \left\{e12, e13, e14\right\} = e 14 = 3000 J / m .$

Dies korrespondiert zu der Annahme des größtmöglichen zu erwartenden Energieverbrauchs, d.h. der Annahme, dass das Fahrzeug von dem Straßenabschnitt I1 auf den Straßenabschnitt I4 wechselt.

Dies schließt die Berechnung des Energieverbrauchs-Prognosewert e1 für den in Schritt S2 ausgewählten Straßenabschnitt I1 ab.

In Schritt S25 wird geprüft, ob es noch einen Straßenabschnitt gibt, für den kein Energieverbrauchs-Prognosewert berechnet wurde. In diesem Fall wird das Verfahren in Schritt S2 weitergeführt, andernfalls in Schritt S3.

In Schritt S3 werden die Basis-Kartendaten um die berechneten Energieverbrauchs-Prognosewerte erweitert, insbesondere der Energieverbrauchs-Prognosewert e1 = 3000 J/m für den Straßenabschnitt I1. Die erweiterten Basis-Kartendaten werden als Kartendaten K' bereitgestellt.

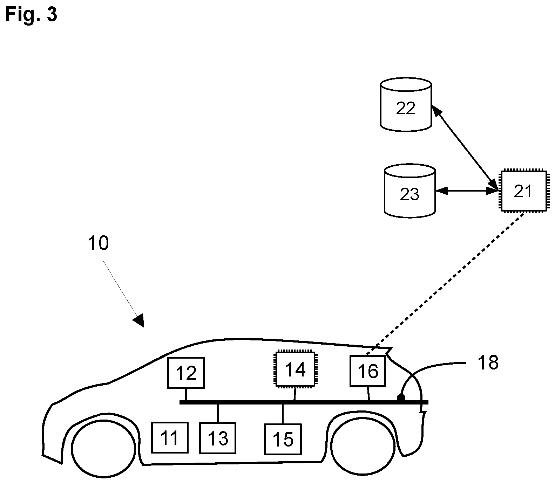

Figur 3 zeigt ein Ausführungsbeispiel des erfindungsgemäßen Systems.

Das System umfasst das Elektrofahrzeug 10, welches die folgenden Komponenten aufweist:
- die Batterie 11 zum Antrieb des Elektrofahrzeugs 10;
- die Heizvorrichtung 13 zum Vorwärmen der Batterie 11;
- die Energiemanagementvorrichtung 12;
- den Bordcomputer 14;
- den GPS-Sensor 15; und
- die Mobilfunk-Kommunikationsvorrichtung 16.

In diesem Ausführungsbeispiel wird davon ausgegangen, dass die Komponenten 12 bis 16 des Fahrzeugs 10 über einen gemeinsamen Bus 18 kommunizieren können.

Die Energiemanagementvorrichtung 12 ist dazu ausgebildet, mittels der Heizvorrichtung 13 einen Vorwärmvorgang der Batterie 11 vorzunehmen.

Das System umfasst ferner eine Backend-Rechenvorrichtung 21, die kommunikativ mit den beiden Datenbanken 22 und 23 verbunden ist. Die Datenbank 22 enthält ein trainiertes Energieverbrauchs-Prognosemodell. Die Datenbank 23 enthält Basis-Kartendaten und/oder Kartendaten mit Energieverbrauchs-Prognosewerten, die mittels der Backend-Rechenvorrichtung erzeugt worden sind, wie es in Verbindung mit dem Ausführungsbeispiel der Figur 2 beschrieben worden ist.

Das dargestellte System ist dazu ausgebildet, das beschriebene Verfahren auszuführen. Insbesondere ist es in dem beschriebenen System möglich, ein vorausschauendes Energiemanagement für das Elektrofahrzeug 10 zu betreiben, indem die berechneten Energieverbrauchs-Prognosewerte herangezogen werden.

Insbesondere ist der Bordcomputer 16 dazu ausgebildet, einen GPS-Standort des Elektrofahrzeugs 10 mittels des GPS-Sensors 15 zu erfassen und mittels der Mobilfunk-Kommunikationsvorrichtung 16 an die Backend-Rechenvorrichtung 21 zu übermitteln. Die Backend-Rechenvorrichtung 21 kann auf der Grundlage der empfangenen GPS-Position einen Referenz-Energieverbrauchs-Prognosewert unter Verwendung der Kartendaten bestimmen und diesen an das Fahrzeug zurücksenden. Hierbei kann es sich, wie in Verbindung mit dem Verfahren beschrieben, beispielsweise um den maximalen Energieverbrauchs-Prognosewert handeln, der in einem Umkreis von 5 km um den GPS-Standort existiert. Der Bordcomputer 14 ist dazu ausgebildet, den empfangenen Referenz-Energieverbrauchswert der Energiemanagementvorrichtung 12 bereitzustellen. Die Energiemanagementvorrichtung 12 ist dazu ausgebildet, sofern der empfangene Referenz-Energieverbrauchs-Prognosewert einen bestimmten Schwellenwert überschreitet, einen Vorwärmvorgang der Batterie 11 mittels der Heizvorrichtung 13 durchzuführen.

Die vorhergehenden Ausführungsbeispiele sind teilweise vereinfacht dargestellt und lediglich beispielhaft zu verstehen. Es versteht sich von selbst, dass diverse Abweichungen und Modifikationen denkbar sind, ohne vom Wesen der vorliegenden Erfindung abzuweichen.

Beispielsweise werden in Figur 1 nur die direkt verbundenen Straßenabschnitt I2, I3 und I4 als Nachbar-Straßenabschnitte des Straßenabschnitts I1 betrachtet. In einer modifizierten Definition könnte aber auch der Straßenabschnitt I5 als Nachbar-Straßenabschnitt des Straßenabschnitts I1 betrachtet werden, da beide durch den Straßenabschnitt I4 miteinander verbunden sind.

Im Ausführungsbeispiel der Figur 2 sind die Attribute der Straßenabschnitte bzw. der Änderungsvektoren der Einfachheit halber auf Geschwindigkeitswerte begrenzt. Für eine umfassende Energieverbrauchsprognose ist es selbstverständlich vorteilhaft, weitere Attribute (wie Steigung, Straßentyp etc.) zu betrachten. Die Änderungsvektoren weisen in solchen Fällen entsprechend viele Komponenten auf, für die eine andere Art der Regression bzw. Klassifizierung durch das Prognosemodell vorzusehen ist.

In Figur 3 sind die Komponenten des Fahrzeugs, lediglich zur einfacheren Erklärbarkeit, an einen gemeinsamen Fahrzeugbus angeschlossen. Selbstverständlich können die genannten Komponenten auch über unterschiedliche Bussysteme oder anderweitig kommunizieren, solange die Fahrzeug-Rechenvorrichtung die entsprechenden Daten abrufen kann. Die Datenbanken 22, 23 können auch in einer Datenbank bzw. einem Speicher zusammengefasst sein.

### Bezugszeichenliste

- 10: Elektrofahrzeug
- 11: Batterie
- 12: Energiemanagementvorrichtung
- 13: Heizvorrichtung
- 14: Bordcomputer
- 15: GPS-Sensor
- 16: Mobilfunk-Kommunikationsvorrichtung
- 18: Bus
- 21: Backend-Rechenvorrichtung
- 22, 23: Datenbank

- K: Basis-Kartendaten
- K': Kartendaten
- d12, d13, d14: Übergangsvektoren
- e12, e13, d14: Energieverbrauchswerte
- e1: Energieverbrauchswert (für Straßenabschnitt I1)
- I1, I2, I3, I4, I5: Straßenabschnitt
- v1, v2, v3, v4: Geschwindigkeitsbegrenzung
- U: Menge der Nachbar-Straßenabschnitte
- S1: Laden der Basis-Kartendaten
- S2: Auswählen eines Straßenabschnitts
- S21: Ermitteln der Nachbar-Straßenabschnitte
- S22: Berechnen der Übergangsvektoren
- S23: Berechnen der Energieverbrauchswerte
- S24: Berechnen des Energieverbrauchs-Prognosewertes
- S25: Prüfung auf unverarbeitete Straßenabschnitte
- S3:: Bereitstellen der Kartendaten

## Patentansprüche

1. Computerimplementiertes Verfahren zum Erzeugen von Kartendaten (K') mit Energieverbrauchs-Prognosewerten, insbesondere zur Verwendung im Energiemanagement eines Elektrofahrzeugs (10),
wobei das Verfahren die folgenden Schritte umfasst:
a) Laden von Basis-Kartendaten (K), die ein Netz aus Straßenabschnitten (I1, I2, I3, I4, I5) aufweisen;
b) Ausführen der folgenden Schritte, jeweils für jeden Straßenabschnitt (I1, I2, I3, I4, I5):
b1) Ermitteln einer Menge (U) von Nachbar-Straßenabschnitten unter Verwendung der Basis-Kartendaten (K);
b2) Berechnen von Übergangsvektoren (d12, d13, d14) für jede Kombination aus dem Straßenabschnitt (I1, I2, I3, I4, I5) und einem Nachbar-Straßenabschnitt unter Verwendung der Basis-Kartendaten (K);
b3) Berechnen von jeweils einem Energieverbrauchswert (e12, e13, e14) für jeden Übergangsvektor (d12, d13, d14) unter Verwendung eines Energieverbrauchs-Prognosemodells (M);
b4) Berechnen eines Energieverbrauchs-Prognosewertes (e1) des Straßenabschnitts (I1, I2, I3, I4, I5) unter Verwendung der berechneten Energieverbrauchswerte (e12, e13, e14);
c) Bereitstellen von Kartendaten (K'), welche das Netz aus Straßenabschnitten (I1, I2, I3, I4, I5) und die zugehörigen Energieverbrauchs-Prognosewerte (e1) aufweisen.

2. Computerimplementiertes Verfahren nach Anspruch 1,
wobei die Menge (U) von Nachbar-Straßenabschnitten alle Straßenabschnitte (I1, I2, I3, I4, I5) enthält, die mit dem Straßenabschnitt (I1, I2, I3, I4, I5) unmittelbar verbunden sind.

3. Computerimplementiertes Verfahren nach einem der vorhergehenden Ansprüche, wobei die Menge (U) von Nachbar-Straßenabschnitten alle Straßenabschnitte (I1, I2, I3, I4, I5) enthält, die mit dem Straßenabschnitt (I1, I2, I3, I4, I5) durch mindestens einen weiteren Straßenabschnitt (I1, I2, I3, I4, I5) verbunden sind.

4. Computerimplementiertes Verfahren nach einem der vorhergehenden Ansprüche, wobei die Basis-Karten (K) für zumindest einige der Straßenabschnitte (I1, I2, I3, I4, I5) einen oder mehrere der folgenden Werte aufweisen: Geschwindigkeitsbegrenzung (v1, v2, v3, v4), Straßentyp, Steigung, Länge.

5. Computerimplementiertes Verfahren nach einem der vorhergehenden Ansprüche, wobei die Übergangsvektoren (d12, d13, d14) einen oder mehrere der folgenden Werte aufweisen: Differenz der Geschwindigkeitsbegrenzung (v1, v2, v3, v4), Änderung des Straßentyps, Steigungsdifferenz.

6. Computerimplementiertes Verfahren nach einem der vorhergehenden Ansprüche, wobei das Energieverbrauchs-Prognosemodell (M) mindestens ein, insbesondere trainiertes, Regressionsmodell aufweist, das eine Abbildungsvorschrift von Übergangsvektoren (d12, d13, d14) zu Energieverbrauchswerten (e12, e13, e14) enthält.

7. Computerimplementiertes Verfahren nach Anspruch 6,
wobei das mindestens eine Regressionsmodell mindestens einen Entscheidungsbaum, bevorzugt einen Random Forest, aufweist.

8. Computerimplementiertes Verfahren nach einem der vorhergehenden Ansprüche, wobei in Schritt b4) der Energieverbrauchs-Prognosewert (e1) des Straßenabschnitts (I1, I2, I3, I4, I5) dem größten unter den Energieverbrauchswerten (e12, e13, e14) entspricht, die in Schritt b3) berechnet werden.

9. Computerimplementiertes Verfahren nach einem der vorhergehenden Ansprüche, wobei das Verfahren ferner die folgenden Schritte umfasst:
d) Ermitteln eines GPS-Standorts eines Elektrofahrzeugs (10);
e) Ermitteln eines, insbesondere maximalen, Referenz-Energieverbrauchs-Prognosewertes in einer Umgebung des Elektrofahrzeugs (10) gemäß dem GPS-Standort unter Verwendung der Kartendaten (K');

10. Computerimplementiertes Verfahren nach Anspruch 9,
wobei das Verfahren ferner die folgenden Schritte umfasst:
f) Anpassen einer Energiemanagement-Konfiguration des Elektrofahrzeugs (10), insbesondere zum Vorwärmen einer Batterie (11) des Elektrofahrzeugs (10), basierend auf einem Referenz-Energieverbrauchs-Prognosewert (e1).

11. Computerlesbares Speichermedium, welches Instruktionen enthält, die mindestens einen Prozessor dazu veranlassen, ein Verfahren nach einem der vorhergehenden Ansprüche zu implementieren, wenn die Instruktionen durch den mindestens einen Prozessor ausgeführt werden.

12. System zum Erzeugen von Kartendaten (K') mit Energieverbrauchs-Prognosewerten, insbesondere zur Verwendung im Energiemanagement eines Elektrofahrzeugs (10),
wobei das System das Folgende aufweist:
- mindestens einen Speicher (22, 23), welcher ein Energieverbrauchs-Prognosemodell (M) und/oder Basis-Kartendaten (K) enthält, die ein Netz aus Straßenabschnitten (I1, I2, I3, I4, I5) aufweisen;
- eine Backend-Rechenvorrichtung (21), welche dazu ausgebildet ist, die folgenden Schritte auszuführen:
a) Laden der Basis-Kartendaten (K);
b) Ausführen der folgenden Schritte, jeweils für jeden Straßenabschnitt (I1, I2, I3, I4, I5):
b1) Ermitteln einer Menge (U) von Nachbar-Straßenabschnitten unter Verwendung der Basis-Kartendaten (K);
b2) Berechnen von Übergangsvektoren (d12, d13, d14) für jede Kombination aus dem Straßenabschnitt (I1, I2, I3, I4, I5) und einem Nachbar-Straßenabschnitt unter Verwendung der Basis-Kartendaten (K);
b3) Berechnen von jeweils einem Energieverbrauchswert (e12, e13, e14) für jeden Übergangsvektor (d12, d13, d14) unter Verwendung des Energieverbrauchs-Prognosemodells (M);
b4) Berechnen eines Energieverbrauchs-Prognosewertes (e1) des Straßenabschnitts (I1, I2, I3, I4, I5) unter Verwendung der berechneten Energieverbrauchswerte (e12, e13, e14);
c) Bereitstellen von Kartendaten (K'), welche das Netz aus Straßenabschnitten (I1, I2, I3, I4, I5) und die zugehörigen Energieverbrauchs-Prognosewerte (e1) aufweisen.

13. System nach Anspruch 12,
wobei das System ferner ein Elektrofahrzeug (10) umfasst, welches das Folgende aufweist:
- einen GPS-Sensor (15);
- eine Kommunikationsvorrichtung (16); und
- eine Fahrzeug-Rechenvorrichtung (14);
wobei die Fahrzeug-Rechenvorrichtung (14) dazu eingerichtet ist,
- eine Position des Elektrofahrzeugs mittels des GPS-Sensors (15) zu bestimmen;
- die Position mittels der Kommunikationsvorrichtung (16) an die Backend-Rechenvorrichtung (21) zu übermitteln;
- einen Referenz-Energieverbrauchs-Prognosewert (e1) mittels der Kommunikationsvorrichtung (16) von der Backend-Rechenvorrichtung (16) zu empfangen; und
wobei die Backend-Rechenvorrichtung (21) ferner dazu ausgebildet ist, basierend auf der Position und den Kartendaten (K') den Referenz-Energieverbrauchs-Prognosewert (e1) zu ermitteln und an die Kommunikationsvorrichtung (16) zu übermitteln.

14. System nach Anspruch 13,
wobei das Elektrofahrzeug (10) ferner das Folgende aufweist:
- eine Energiemanagementvorrichtung (12); und
- eine Heizvorrichtung (13) zum Heizen der Batterie (11) des Elektrofahrzeugs (10),
wobei die Energiemanagementvorrichtung (12) dazu ausgebildet ist, in Abhängigkeit von dem Referenz-Energieverbrauchs-Prognosewert (e1) die Heizvorrichtung (13) zu steuern.

## Claims

1. Computer-implemented method for generating map data (K') with energy consumption forecast values, in particular for use in the energy management of an electric vehicle (10),
the method comprising the following steps:
a) loading base map data (K), which comprises a network of road sections (I1, I2, I3, I4, I5);
b) carrying out the following steps for each road section (I1, I2, I3, I4, I5):
b1) determining a set (U) of neighbouring road sections using the base map data (K);
b2) calculating transition vectors (d12, d13, d14) for each combination of the road section (I1, I2, I3, I4, I5) and a neighbouring road section using the base map data (K);
b3) calculating an energy consumption value (e12, e13, e14) for each transition vector (d12, d13, d14) using an energy consumption forecast model (M);
b4) calculating an energy consumption forecast value (e1) of the road section (I1, I2, I3, I4, I5) using the calculated energy consumption values (e12, e13, e14);
c) providing map data (K') comprising the network of road sections (I1, I2, I3, I4, I5) and the associated energy consumption forecast values (e1).

2. Computer-implemented method according to Claim 1, wherein the set (U) of neighbouring road sections contains all road sections (I1, I2, I3, I4, I5) that are directly connected to the road section (I1, I2, I3, I4, I5).

3. Computer-implemented method according to one of the preceding claims,
wherein the set (U) of neighbouring road sections contains all road sections (I1, I2, I3, I4, I5) that are connected to the road section (I1, I2, I3, I4, I5) by at least one other road section (I1, I2, I3, I4, I5).

4. Computer-implemented method according to one of the preceding claims,
wherein the base maps (K) for at least some of the road sections (I1, I2, I3, I4, I5) have one or more of the following values: speed limit (v1, v2, v3, v4), road type, gradient, length.

5. Computer-implemented method according to one of the preceding claims,
wherein the transition vectors (d12, d13, d14) have one or more of the following values: difference in speed limit (v1, v2, v3, v4), change of road type, gradient difference.

6. Computer-implemented method according to one of the preceding claims,
wherein the energy consumption forecast model (M) comprises at least one, in particular trained, regression model, which contains a mapping rule from transition vectors (d12, d13, d14) to energy consumption values (e12, e13, e14).

7. Computer-implemented method according to Claim 6, wherein the at least one regression model comprises at least one decision tree, preferably a random forest.

8. Computer-implemented method according to one of the preceding claims,
wherein in step b4) the energy consumption forecast value (e1) of the road section (I1, I2, I3, I4, I5) corresponds to the largest of the energy consumption values (e12, e13, e14) calculated in step b3).

9. Computer-implemented method according to one of the preceding claims,
the method further comprising the following steps:
d) determining a GPS location of an electric vehicle (10);
e) determining a, in particular maximum, reference energy consumption forecast value in an environment of the electric vehicle (10) according to the GPS location using the map data (K').

10. Computer-implemented method according to Claim 9, the method further comprising the following steps:
f) adjusting an energy management configuration of the electric vehicle (10), in particular for preheating a battery (11) of the electric vehicle (10), based on a reference energy consumption forecast value (e1).

11. Computer-readable storage medium containing instructions which cause at least one processor to implement a method according to one of the preceding claims when the instructions are executed by the at least one processor.

12. System for generating map data (K') with energy consumption forecast values, in particular for use in the energy management of an electric vehicle (10),
the system comprising the following:
- at least one memory (22, 23), containing an energy consumption forecast model (M) and/or base map data (K) which comprises a network of road sections (I1, I2, I3, I4, I5);
- a backend computing device (21) which is designed to carry out the following steps:
a) loading the base map data (K);
b) carrying out the following steps for each road section (I1, I2, I3, I4, I5):
b1) determining a set (U) of neighbouring road sections using the base map data (K);
b2) calculating transition vectors (d12, d13, d14) for each combination of the road section (I1, I2, I3, I4, I5) and a neighbouring road section using the base map data (K);
b3) calculating an energy consumption value (e12, e13, e14) for each transition vector (d12, d13, d14) using the energy consumption forecast model (M);
b4) calculating an energy consumption forecast value (e1) of the road section (I1, I2, I3, I4, I5) using the calculated energy consumption values (e12, e13, e14);
c) providing map data (K') comprising the network of road sections (I1, I2, I3, I4, I5) and the associated energy consumption forecast values (e1).

13. System according to Claim 12,
wherein the system further comprises an electric vehicle (10), which comprises the following:
- a GPS sensor (15);
- a communication device (16); and
- a vehicle computing device (14);
wherein the vehicle computing device (14) is configured
- to determine a position of the electric vehicle using the GPS sensor (15);
- to transmit the position to the backend computing device (21) by means of the communication device (16);
- to receive a reference energy consumption forecast value (e1) from the backend computing device (16) by means of the communication device (16); and
wherein the backend computing device (21) is further designed to determine the reference energy consumption forecast value (e1) based on the position and the map data (K') and to transmit said value to the communication device (16).

14. System according to Claim 13,
wherein the electric vehicle (10) further comprises the following:
- an energy management device (12); and
- a heater (13) for heating the battery (11) of the electric vehicle (10),
wherein the energy management device (12) is designed to control the heater (13) depending on the reference energy consumption forecast value (e1).

## Revendications

1. Procédé mis en œuvre par ordinateur pour générer des données cartographiques (K') avec des valeurs de prévision de consommation d'énergie, en particulier pour une utilisation dans la gestion de l'énergie d'un véhicule électrique (10),
le procédé comprenant les étapes suivantes :
a) le chargement de données cartographiques de base (K), qui comportent un réseau de tronçons routiers (I1, I2, I3, I4, I5) ;
b) l'exécution des étapes suivantes, pour chaque tronçon routier respectif (I1, I2, I3, I4, I5) :
b1) la détermination d'un ensemble (U) de tronçons routiers adjacents à l'aide des données cartographiques de base (K) ;
b2) le calcul de vecteurs de transition (d12, d13, d14) pour chaque combinaison du tronçon routier (I1, I2, I3, I4, I5) et d'un tronçon routier adjacent à l'aide des données cartographiques de base (K) ;
b3) le calcul d'une valeur de consommation d'énergie respective (e12, e13, e14) pour chaque vecteur de transition (d12, d13, d14) à l'aide d'un modèle de prévision de consommation d'énergie (M) ;
b4) le calcul d'une valeur de prévision de consommation d'énergie (e1) du tronçon routier (I1, I2, I3, I4, I5) à l'aide des valeurs de consommation d'énergie calculées (e12, e13, e14) ;
c) la fourniture de données cartographiques (K') comportant le réseau de tronçons routiers (I1, I2, I3, I4, I5) et les valeurs de prévision de consommation d'énergie (e1) qui y sont associées.

2. Procédé mis en œuvre par ordinateur selon la revendication 1,
dans lequel l'ensemble (U) de tronçons routiers adjacents contient tous les tronçons routiers (I1, I2, I3, I4, I5) qui sont directement reliés au tronçon routier (I1, I2, I3, I4, I5).

3. Procédé mis en œuvre par ordinateur selon l'une des revendications précédentes,
dans lequel l'ensemble (U) de tronçons routiers adjacents contient tous les tronçons routiers (I1, I2, I3, I4, I5) qui sont reliés au tronçon routier (I1, I2, I3, I4, I5) par au moins un autre tronçon routier (I1, I2, I3, I4, I5).

4. Procédé mis en œuvre par ordinateur selon l'une des revendications précédentes,
dans lequel les cartes de base (K) pour au moins certains tronçons routiers (I1, I2, I3, I4, I5) comportent une ou plusieurs des valeurs suivantes : limite de vitesse (v1, v2, v3, v4), type de route, pente, longueur.

5. Procédé mis en œuvre par ordinateur selon l'une des revendications précédentes,
dans lequel les vecteurs de transition (d12, d13, d14) comportent une ou plusieurs des valeurs suivantes : différence de limite de vitesse (v1, v2, v3, v4), modification du type de route, différence de pente.

6. Procédé mis en œuvre par ordinateur selon l'une des revendications précédentes,
dans lequel le modèle de prévision de consommation d'énergie (M) comporte au moins un modèle de régression, en particulier entraîné, qui contient une règle de correspondance de vecteurs de transition (d12, d13, d14) avec des valeurs de consommation d'énergie (e12, e13, e14).

7. Procédé mis en œuvre par ordinateur selon la revendication 6,
dans lequel l'au moins un modèle de régression comporte au moins un arbre de décision, de préférence une forêt aléatoire.

8. Procédé mis en œuvre par ordinateur selon l'une des revendications précédentes,
dans lequel, à l'étape b4), la valeur de prévision de consommation d'énergie (e1) du tronçon routier (I1, I2, I3, I4, I5) correspond à la plus grande des valeurs de consommation d'énergie (e12, e13, e14) calculées à l'étape b3).

9. Procédé mis en œuvre par ordinateur selon l'une des revendications précédentes,
le procédé comprenant en outre les étapes suivantes :
d) la détermination d'une localisation GPS d'un véhicule électrique (10) ;
e) la détermination d'une valeur de prévision de consommation d'énergie de référence, en particulier maximale, dans un environnement du véhicule électrique (10) en fonction de la localisation GPS à l'aide des données cartographiques (K').

10. Procédé mis en œuvre par ordinateur selon la revendication 9,
le procédé comprenant en outre les étapes suivantes :
f) l'adaptation d'une configuration de gestion de l'énergie du véhicule électrique (10), en particulier pour le préchauffage d'une batterie (11) du véhicule électrique (10), sur la base d'une valeur de prévision de consommation d'énergie de référence (e1).

11. Support de mémoire lisible par ordinateur contenant des instructions qui amènent au moins un processeur à mettre en œuvre un procédé selon l'une des revendications précédentes lorsque les instructions sont exécutées par au moins un processeur.

12. Système pour générer des données cartographiques (K') avec des valeurs de prévision de consommation d'énergie, en particulier pour une utilisation dans la gestion de l'énergie d'un véhicule électrique (10),
le système comportant les éléments suivants :
- au moins une mémoire (22, 23) contenant un modèle de prévision de consommation d'énergie (M) et/ou des données cartographiques de base (K) qui comportent un réseau de tronçons routiers (I1, I2, I3, I4, I5) ;
- un dispositif informatique dorsal (21) qui est conçu pour exécuter les étapes suivantes :
a) le chargement des données cartographiques de base (K) ;
b) l'exécution des étapes suivantes, pour chaque tronçon routier respectif (I1, I2, I3, I4, I5) :
b1) la détermination d'un ensemble (U) de tronçons routiers adjacents à l'aide des données cartographiques de base (K) ;
b2) le calcul de vecteurs de transition (d12, d13, d14) pour chaque combinaison du tronçon routier (I1, I2, I3, I4, I5) et d'un tronçon routier adjacent à l'aide des données cartographiques de base (K) ;
b3) le calcul d'une valeur de consommation d'énergie respective (e12, e13, e14) pour chaque vecteur de transition (d12, d13, d14) à l'aide du modèle de prévision de consommation d'énergie (M) ;
b4) le calcul d'une valeur de prévision de consommation d'énergie (e1) du tronçon routier (I1, I2, I3, I4, I5) à l'aide des valeurs de consommation d'énergie calculées (e12, e13, e14) ;
c) la fourniture de données cartographiques (K') comportant le réseau de tronçons routiers (I1, I2, I3, I4, I5) et les valeurs de prévision de consommation d'énergie (e1) qui y sont associées.

13. Système selon la revendication 12,
le système comprenant en outre un véhicule électrique (10), qui comporte les éléments suivants :
- un capteur GPS (15) ;
- un dispositif de communication (16) ; et
- un dispositif informatique de véhicule (14) ;
dans lequel le dispositif informatique de véhicule (14) est conçu pour
- déterminer une position du véhicule électrique au moyen du capteur GPS (15) ;
- transmettre la position au dispositif informatique dorsal (21) au moyen du dispositif de communication (16) ;
- recevoir une valeur de prévision de consommation d'énergie de référence (e1) au moyen du dispositif de communication (16) en provenance du dispositif informatique dorsal (16) ; et
dans lequel le dispositif informatique dorsal (21) est en outre conçu pour déterminer la valeur de prévision de consommation d'énergie de référence (e1) sur la base de la position et des données cartographiques (K') et pour la transmettre au dispositif de communication (16).

14. Système selon la revendication 13,
dans lequel le véhicule électrique (10) comprend en outre les éléments suivants :
- un dispositif de gestion de l'énergie (12) ; et
- un dispositif de chauffage (13) pour chauffer la batterie (11) du véhicule électrique (10),
dans lequel le dispositif de gestion de l'énergie (12) est conçu pour commander le dispositif de chauffage (13) en fonction de la valeur de prévision de consommation d'énergie de référence (e1).
